## Europäisches Patentamt
## European Patent Office
## Office européen des brevets

(11) Publication number: **0 294 184**
**A2**

(12) # EUROPEAN PATENT APPLICATION

(21) Application number: **88305013.0**

(51) Int. Cl.⁴: **B 32 B 27/08**

(22) Date of filing: **01.06.88**

(30) Priority: **01.06.87 US 56204**

(43) Date of publication of application:
**07.12.88 Bulletin 88/49**

(84) Designated Contracting States: **BE DE FR GB IT**

(71) Applicant: **OLIN CORPORATION**
**350 Knotter Drive**
**Cheshire Connecticut 06410-0586 (US)**

(72) Inventor: **Robeson, Michelle Ann**
**869 Orange Street, 5 West**
**New Haven Connecticut 06511 (US)**

**Armer, Thomas Alex**
**570 Prospect Street, No. 6**
**New Haven Connecticut 06511 (US)**

(74) Representative: **Thomas, Roger Tamlyn et al**
**D. Young & Co. 10 Staple Inn**
**London WC1V 7RD (GB)**

(54) Multiple layer container for transport and storage of high purity chemicals.

(57) A hollow multiple-layered container for the storage of high purity and highly reactive chemicals is formed of a chemical resistant and non-contaminating layer of polyvinylidene polymer or copolymer or a perfluoroalkoxy vinyl ether polymer or copolymer and a second structurally reinforcing layer bonded or fastened to the first chemical resistant and non-contaminating layer comprising a polypropylene, polyethylene, polycarbonate, polyarylate, polysulfone, or a blend of polyethylene and polyethylene-vinyl acetate.

EP 0 294 184 A2

## Description

## MULTIPLE LAYER CONTAINER FOR TRANSPORT AND STORAGE OF HIGH PURITY CHEMICALS

### Background of the Invention

This invention relates generally to multiple-layered thermoplastic structures. More specifically, it is concerned with a hollow multiple-layered container, formed by co-extruding or co-injecting a first chemically resistant and non-contaminating inner layer and at least a second structurally reinforcing outer layer into a blow mold. The hollow multiple-layered container is used for the storage of high purity and highly reactive chemicals.

Where the chemicals are utilized in semiconductor applications, only extremely low levels of ionic, organic and particulate contaminants are permitted in the chemicals or are allowed to leach from the container into the chemicals. Trace metals, such as sodium, potassium, lithium, boron or phosphorous shift the intrinsic resistivity of the semiconductor or create potentially corrosive products in moist environments under thermal stress. Where sodium, potassium or lithium contamination occurs, the chemicals are unacceptable because the lifetime requirements for semiconductor applications are not met. Additionally, the presence of particles contaminating the chemicals are detrimental to semiconductor device fabrication since they cause non-uniform film thicknesses and directly affect thin film functionality. Particle contamination is a critical parameter and must be kept at low levels in high purity chemicals, such as acids used in the semiconductor industry for etching or washing.

Traditionally, glass has been the container utilized for the storage of high purity semiconductor chemicals and more recently glass with plastic overcoating has been used because of safety considerations. Plastic in the form of polyethylene has also been used in containers ranging from small one gallon size to medium 55 gallon drums to bulk storage containers. However, each material has its limitations or disadvantages.

Where glass, or glass with a plastic overcoat, is used for the storage of acid, the glass containers can leach mobile ions, such as the aforementioned sodium, potassium, lithium, boron and phosphorous, into the chemicals. Additionally glass slivers can contaminate high purity chemicals. Glass containers are more easily broken than plastic containers.

Where plastic is used, such as polyethylene or polypropylene, highly reactive chemicals, such as 70% nitric acid, cause discoloration of the plastic used in the containers. This implies that degradation may be occurring. Chemicals of this type also will cause environmental stress cracking in the plastic containers that can compromise the structural integrity of the container and introduce contaminants and particles into the chemicals.

The need for reliable containers to store and transport high purity and highly reactive chemicals has led to the use of a single layer of TEFLON® fluorocarbon resins, sold under the tradename of TEFLON PFA (perfluoroalkoxy vinyl ether copolymer) by E.I. DuPont, in containers that store and transport high purity and highly reactive chemicals. However, such containers are extremely expensive and are limited in their use.

Other plastics have been utilized in containers to store and transport high purity chemicals. Where fluorinated resins have been used to obtain their inherent advantage of resistance to chemicals, the resins, including PTFE (polytetrafluoroethylene) and PFA (tetrafluoroethylene-perfluoroalkoxy-ethylene) copolymer resin, an intermediate adhesive or tie layer is required to bond the chemically resistant inner layer adjacent to the chemical to a structurally reinforcing outer layer. Adhesives for PTFE and PFA copolymers depend upon glycidal ether grafted to various polymers, including polyvinyl acetate and polyalpha-olefins.

The adhesives employed as tie layers have included polymers such as vinyl acetate polymer and a copolymer of ethylene and vinyl acetate to adhere a vinyl or vinylidene fluoride polymer or copolymer to an alpha-olefin polymer, such as polyethylene, polypropylene or polystyrene. Other adhesives have included blends of polymethylacrylate, polyethyl methylacrylate or polymethyl methacrylate with polyvinylidene fluoride or vinyl acetate copolymers. To promote adhesion, polyvinylidene fluoride surfaces have been treated with aprotic polar solvents prior to bonding with a polymethyl methacrylate. Direct blow-molding utilizing a thermoplastic polyester resin layer and a polycarbonate resin layer as the interior layer adjacent to the chemical has achieved the direct adhesion of these two layers without any adhesive. However, at least one layer of the multiple-layered hollow container formed by this process must be a thermoplastic polyester, such as polyethylene terephthalate or polybutylene terephthalate.

The foregoing problems of attempting to obtain a low cost, inert, non-contaminating, and a liquid and vapor barrier effective container for the storage and transportion of high purity and highly reactive chemicals are solved by the present invention by providing a hollow, multiple-layered blow molded container with a first chemically resistant and non-contaminating inner layer of a polyvinylidene fluoride polymer or copolymers or perfluoroalkoxy vinyl ether polymer or copolymer and a second structurally reinforcing layer bonded or fastened to the first chemical resistant layer, the inner layer and the second structurally reinforcing layer being delivered to the die or mold in molten form by co-injection or co-extrusion.

Embodiments of the present invention provide a low cost multiple-layered container for the transport and storage of high purity and highly reactive chemicals.

Embodiments of the present invention provide a hollow multiple-layered container for the storage of high purity and highly reactive chemicals that does not elute mobile ions into the chemical being stored and which does not contribute to particle contamination of the stored chemical.

It is a preferred feature of the present invention that the multiple layers are co-extruded or co-injected into a die and then blow molded to form a hollow multiple-layered container having a first chemically resistant and non-contaminating layer and a second structurally reinforcing layer that bond directly to each other.

It is another preferred feature of the present invention that the first chemical resistant and non-contaminating layer is a polyvinylidene fluoride polymer or copolymers, or a perfluoroalkoxy vinyl ether polymer or copolymer.

It is another preferred feature of the present invention that the second structurally reinforcing layer directly bonded to the first chemically resistant and non-contaminating layer comprises high density polyethylene or a blend of high density polyethylene and polyethylene-vinyl acetate.

It is still another preferred feature of the present invention that the multiple layers are an effective liquid and vapor barrier to the penetration of stored highly reactive chemicals, such as strong oxidizers, reducers and light sensitive developers.

Embodiments of the present invention provide a low cost hollow, multiple-layered blow molded container that does not contribute to the contamination of the stored chemical by eluting ions, organic molecules or particulates.

Embodiments of the present invention provide a hollow, multiple-layered blow molded container suitable for the storage of semiconductor grade chemicals.

According to one aspect of this invention, there is provided a hollow, multiple-layered blow molded container for the storage of high purity and highly reactive chemicals comprising a first chemically resistant inner layer of a polyvinylidene polymer or copolymer, or a perfluoroalkoxy vinyl ether polymer or copolymer and a second structurally reinforcing layer bonded or fastened thereto, the second layer being formed of high density polyethylene, polypropylene or a blend of high density polyethylene and polyethylene-vinyl acetate.

Further aspects will be apparent from the claims.

A preferred embodiment of this invention will now be described by way of example with respect to the drawings, in which:-

FIGURE 1 is a side elevational view of a hollow, multiple-layered blow molded container with a portion of the side broken away;

FIGURE 2 is an enlarged side sectional view of the layered container of FIGURE 1 showing a partial sectional view showing a portion of the side of the hollow, multiple-layered blow molded container of FIGURE 1 with two layers bonded together.

FIGURE 3 is an enlarged side sectional view of the layered container of FIGURE 1 showing a partial sectional view showing a portion of the side of the hollow, multiple-layered blow molded container of FIGURE 1 with three layers bonded together.


## Detailed Description of the Preferred Embodiment

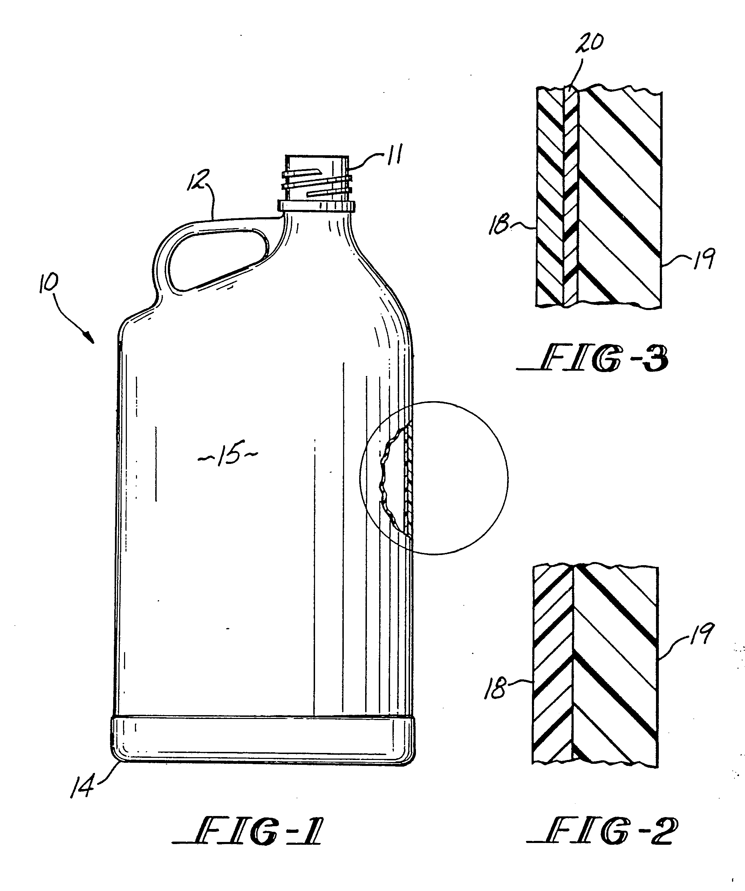

FIGURE 1 shows a side elevational view of a bottle or container 10 that is hollow and has multiple layers that is especially adapted for the storage and transport of chemicals with the high degree of purity required by the electronics industry. Container 10 is blow molded in a die by the introduction of pressurized air into the molten multi-layered cylinder or parison that is produced by a co-extrusion head (not shown).

Container 10 has a threaded top portion 11 that is designed to receive a cap or top (not shown). A solid or crimped handle 12 extends from the container 10 adjacent the top portion 11 to facilitate handling. The sidewall portion 15 connects the threaded top portion 11 and the base 14. The solid crimped handle 12 and the crimped base 14, or other features which cause pinch points can help mechanically fasten the multiple layers of container 10 together, depending upon the materials of construction.

FIGURES 2 and 3 show in an enlarged partial sectional view the sidewall portion with a two layered and three layered structure, respectively.

In FIGURE 2 the inner layer 18 is formed of an appropriate material that is resistant to the high purity and highly reactive chemicals being stored in the container 10, such as electronic grade nitric, hydrochloric or sulfuric acid. Other highly reactive chemicals that are storable in container 10 can include other strong oxidizers, such as phosphoric acid, hydrofluoric acid, peroxides, perchlorates or caustic based developers. Strong reducers, such as persulfates, bisulfates, iodine or hydrosulfites could be stored in container 10, as well as light sensitive developers. Plastic has been the preferred material for use in the inner layer 18 and must be resistant to discoloration, stress cracking, leaching and slivering. Plastic material used has included polyvinylidene fluoride (PVDF), but other fluorinated polymers can include perfluoroalkoxy vinyl ether copolymers (PFA), tetrafluoroethylene-hexafluoropropylene (FEP), ethylene-tetrafluoroethylene (ETFE), and ethylenechlorotrifluoroethylene (ECTFE). This inner layer 18 can have a thickness when blow molded of between about 3 to about 15 mils, but the preferred thickness is from about 3 to about 5 mils.

Outer layer 19 serves as the structurally reinforcing layer to prevent the inner layer 18 from being damaged or ruptured during storage and transport. Plastic is the preferred material and, more specifically, polypropylene or polyethylene. Polypropylene or high density polyethylene have been preferred, but other suitable plastic materials can include polycarbonate, nylon, polyarylate or polysulfone. Blends of high density polyethylene and polyethylene-vinyl acetate have also been effectively employed. This outer or structurally reinforcing layer 19 can have a thickness when blow molded of between about 10 to about 70 mils, but the preferred thickness is from about 30 to about 40 mils. To satisfy governmental regulations the minimum combined wall thickness of the inner and the outer layers 18 and 19 should be at least about 30 mils.

When PVDF or PFA are used as the inner layer 18 and polypropylene, polyethylene or other plastics including polycarbonate, polyarylate and polysulfone, are used as the outer or structurally reinforcing layer 19, layer 19 mechanically retains and supports the inner layer 18 in its desired form by surrounding it. The two layers 18 and 19 can be joined together by crimping of the layers at the threaded top portion 11, at the handle 12, at the base 14 and along the pinch points. The inner layer 18 and the outer layer 19 adhere weakly when formed of these materials. However, when an inner layer 18 of PVDF and an outer layer 19 formed from a blend of high density polyethylene and polyethylene-vinyl acetate are used, the inner layer 18 and the outer layer 19 are strongly directly bonded together as a result of the blow molding process.

Where a tie layer 20 is utilized to bind the inner layer 18 to the outer layer 19, as seen in FIGURE 3, the tie layer 20 can be formed from saponified copolymers of olefins, polyacrylic acid esters, polyalkylolefin co-acrylic acid esters, polyalphaolefin maleic anhydride or ethylene vinyl acetate copolymers. The preferred materials have been polyethylene-vinyl acetate or a blend of polyethylene-vinyl acetate and either high density polyethylene, polypropylene or PVDF. This tie layer 20 can have an operable thickness of between about 1 mil to about 15 mils, a preferred thickness of between about 2 mils to about 5 mils, and an optimum thickness of about 2 mils.

Where PFA is used as the inner layer 18, the tie layer 20 can be formed of binary blends of fluoropolymers with polyethylene-vinyl acetate and/or styrene-butadiene-styrene block copolymers. Ternary blends of fluoropolymers with ethylene vinyl acetate and/or styrene-butadiene-styrene block copolymers and a thermoplastic that is the major component in outer layer 19, such as polypropylene, polyethylene, polycarbonate, polyarylate or polysulfone, may also be used. A blend of fluoropolymers with polyethylene-vinyl acetate and/or styrene-ethylene-butylene-styrene block copolymers could also be used in the outer or structurally reinforcing layer.

The container 10 is formed by the blow molding of a parison, or molten multi-layered cylinder, produced by extruding the plastic materials comprising the individual layers through a co-extrusion head into a suitable mold. The plastic materials normally have a residence time of between about 3 to about 4 minutes in the co-extrusion process. The parison is blow molded by applying an air pressure of from about 90 to about 130 pounds per square inch. The container 10 is cooled in the mold. Once cooled the container 10 is removed from the mold.

The multiple-layered construction of container 10 is designed specifically to provide an effective barrier to liquid and vapor penetration. The impermeability of the container 10 to ionic species of the stored chemicals is a key feature. This impermeability has been found to be a function of the particular ionic species, the type of inert polymer utilized as the barrier layer of, for example, the inner layer 18, and the thickness of that layer. Container 10 has been designed to have an inner layer 18 that provides for a total permeation or total migration rate of ionic species therethrough of less than or equal to about a 2 percent weight change of the stored chemical plus the container expressed as a percentage of the full container weight, according to the U.S. Packaging Institute's Procedure T-4101 - 84. This design standard can also be defined as a specific gram weight per square inches of exposed internal surface area over a designated length of time, such as 6 months.

A permeability cell was used to test the permeability or migration of ions through polymer films of varying thickness. The permeability cell consisted of two cylindrically shaped chambers each with about a four inch diameter circular cross section and about a 150 cubic centimeter volume. The two chambers were completely sealed from the surrounding air and were separated from each other by a test film of the desired polymer and thickness. One of the two chambers was filled with a solution of the desired ionic species which, in the instances tested here was 70% concentrated nitric acid, but which could equally well have been sulfuric, hydrochloric, hydrofluoric, or phosphoric acid or other highly reactive chemicals. The other chamber was filled with 18 megaohm distilled water. Both chambers were maintained at a temperature of about 25°C $\pm$ 5°C under a nitrogen gas atmosphere.

A conductivity probe calibrated from 0.20 $\mu$ mhos to 200,000.00 u mhos was inserted into the chamber of distilled water. The conductivity of the distilled water changes over time in direct proportion to the ion content as ions migrate across the barrier test film. The permeation rate of the inner layer polymer samples was then determined from the conductivity change. The following data presented in Table I represents the statistical average of at least two samples of the impermeability of the inner layer polymer samples to 70% nitric acid at the indicated film thicknesses. Based on the permeability data, in each instance the acid weight loss presented as a percent of bottle weight was predicted for approximately a one gallon capacity container weighing about 333 grams empty.

TABLE I

| | Thickness (mils) | Acid Weight Loss (% of Bottle Weight) | Number of Days |
|---|---|---|---|
| PFA (DuPont's TEFLON® PFA 350) | 1.00 | 12.34 | 110 |
| | 2.00 | 5.91 | 180 |
| | 5.00 | 0.96 | 180 |
| | 10.00 | 0.52 | 180 |
| PVDF (Soltex's SOLEF 1010) | 5.00 | 0.62 | 27 |
| | 10.00 | 1.86 | 27 |

Compatibility of the inner layer 18 with the highly reactive and/or high purity chemicals stored in container 10 is also critical since the inner layer must both not react with the stored chemical and not contaminate it, such as by degradation. Compatibility also covers the amount of swelling and yellowing that occurs in an inner layer 18 of the container 10 after a highly reactive chemical has been stored in it for an extended period of time. To comply with governmental regulations, no more than a 2% weight change is allowable in plastic containers to be used for shipping and storing chemicals. Because yellow discoloration of the containers implies degradation of the inner layer is occurring, any change in color that resulted in a yellowness index reading of greater than 8 is deemed unacceptable. A yellowness index reading of 8 or greater indicates a visually distinguishable yellow color in the container material. The yellowness index was obtained by the method described in ASTM D 1925.

Swelling was tested by filling 1 gallon blow molded containers with 37% concentrated Olin Hunt hydrochloric acid and 70% concentrated Olin Hunt nitric acid. The containers were sealed and immersed in a thermostatic water bath that was maintained at about 140°F for up to 14 days. All containers were at least 30 mils thick and those with multiple layers had varying inner layers about 10 mils thick combined with high density polyethylene outer layers 19. When a container was selected for sampling at a particular time during the test period, it was emptied, rinsed, air dried and weighed. Weight change was determined in accordance with the U.S. Packaging Institute's Procedure T-4101-84.

Tests for swelling indicated that Soltex's FORTIFLEX XF 450 high density polyethylene is not acceptable for storing 70% nitric acid because of greater than 2% weight change due to swelling during the 180 day period. DuPont's TEFLON PFA 350 and Soltex's S0LEF 1010 PVDF had less than 1% weight change due to swelling during the 14 day test period.

To test for yellowing 1 inch by 6 inch coupons of the polymers were immersed in Olin Hunt 37% hydrochloric acid and 70% nitric acid for periods up to 180 days. These coupons were removed, rinsed, dried and spectrally analyzed or measured by a Spectrogard® Color System spectrometer by Pacific Scientific. Coupons that after exposure had a yellowness index greater than 8 were deemed unacceptable.

The following TABLE II shows that unacceptable discoloration occurred in the ECTFE sold by Allied under the tradename HALAR 300 exposed to 37% concentrated hydrochloric acid and the HDPE sold by Soltex under the tradename FORTIFLEX XF 450 exposed to 70% concentrated nitric acid. The data reflects a time weighted average of the yellowness index.

TABLE II

**37% HCl**

| | PVDF (Solef 1010) | ETCFE (Halar 300) | PERFLUORALKOXY (PFA 350) | HDPE (Fortiflex XF 450) | FEP (FEP 300) |
|---|---|---|---|---|---|
| Yellowness Index | 6.5 | 40.1 | 4.7 | 4.7 | 4.6 |
| Time (Days) | 27 | 110 | 110 | 110 | 110 |

**70% HNO$_3$**

| | PVDF (Solef 1010) | ETCFE (Halar 300) | PERFLUORALKOXY (PFA 350) | HDPE (Fortiflex XF 450) | FEP (FEP 300) |
|---|---|---|---|---|---|
| Yellowness Index | 6.3 | --- | −2.0 | 52.9 | 3.3 |
| Time (Days) | 9 | --- | 9 | 9 | 9 |

Particle contamination of the stored chemicals by the inner layer 18 must not amount to more than 125,000 particles of less than 0.5 micron diameter per liter, while not contributing more than 50 parts per billion (ppb) each of certain specific ions, including copper, sodium, potassium, phosphorous, iron, boron, silicon or calcium. Particle and ion contamination was tested by filling a 1 gallon glass, PFA, PVDF, ETFE and HDPE with either 37% concentrated hydrochloric acid or 70% concentrated nitric acid, as shown, and monitored over a period of time. The time is shown as extending only 27 days. However, the testing continued beyond that time, but repeat data had not yet been obtained.

The ion analysis was accomplished by concentrating about 2 liters of the acid solution down to about 2 mil by heating. For the low mobile ions, such as potassium, sodium and lithium, the ionic concentration or contamination was determined by atomic absorption. An inductively coupled plasma analyzer was then used to determine the remaining individual ion count.

A Hiac Royco Model 4100 Particle Counter with a Model 3200 corrosive Liquid Sampler and a Model 346 BLL Corrosion Liquid Sensor were used to determine the number of particles contributed to the stored chemicals by the storage container. This state of the art equipment and methodology for particle analysis of the contribution of the storage container materials storing highly reactive chemicals indicates that glass contributes significantly more particles than the other materials tested, using the data in Table III for total particles between 0.5 and 15 microns per liter as a qualitative measure only. The samples were allowed to sit for approximately 24 hours to allow microbubbles to settle out. The samples were cooled in an ice bath for about 30 minutes to about 10°C and then the liquid sampler was purged with nitrogen. The analyzer system was flushed twice with 18 megaohm-cm deionized water and calibrated prior to analyzing the acid sample.

The data in the following Table III show that ETFE had unacceptable (greater than 50 ppb) ion contamination for copper and HDPE was unacceptably excessive for calcium. Glass containers are known to contribute greater than 50 ppb metallic ion contamination and are therefore also unacceptable, leaving the FEP, PFA, PVDF and ECTFE containers as the preferred based solely upon ion contamination.

## TABLE III

### IONIC AND PARTICLE CONTAMINATION CONTRIBUTION

**DuPont FEP 100N**

| 37 % HCl | Time (Days) | Cu | Si | Ca | K | Na | Li | Fe | Total Particles ($10^3$) per liter |
|----------|-------------|----|----|----|----|----|----|----|-----------------------------------|
| | 0 | 0 | 0 | 0 | 0 | 0 | 0 | 0 | --- |
| | 9 | 0 | 0 | $<2$ | 0 | 0 | 0 | 0 | --- |
| | 27 | 0 | 0 | $<2$ | 0 | 0 | 0 | 0 | --- |
| | 81 | 0 | 0 | $<15$ | 0 | 0 | 0 | 0 | --- |
| | 180 | 0 | 0 | $<15$ | 0 | 0 | 0 | 0 | --- |

**Allied Halar 300 ECTFE**

| 37% HCl | Time (Days) | Cu | Si | Ca | K | Na | Li | Fe | Total Particles ($10^3$) per liter |
|---------|-------------|----|----|----|----|----|----|----|-----------------------------------|
| | 0 | 0 | 0 | 0 | 0 | 0 | 0 | 0 | --- |
| | 9 | 0 | 0 | $<5$ | 0 | 0 | 0 | 0 | --- |
| | 27 | 0 | 0 | 10 | 0 | 0 | 0 | 0 | --- |
| | 81 | 0 | 0 | 10 | 0 | 0 | 0 | 0 | --- |
| | 180 | 0 | 0 | 10 | 0 | 0 | 0 | 0 | --- |

**Union Carbide HDPE UC 8007**

| 37% HCl | Time (Days) | Cu | Si | Ca | K | Na | Li | Fe | Total Particles ($10^3$) per liter |
|---------|-------------|----|----|----|----|----|----|----|-----------------------------------|
| | 0 | 0 | 0 | 0 | 0 | 0 | 0 | 0 | 0 |
| | 9 | 0 | 10 | 20 | 0 | 0 | 0 | 5 | 39 |
| | 27 | 0 | 10 | 20 | 0 | 0 | 0 | 5 | 53 |
| | 81 | 0 | 10 | 30 | 0 | 0 | 0 | 5 | --- |
| | 180 | 0 | 10 | 50 | 0 | 0 | 0 | 5 | --- |

TABLE III (continued)

## IONIC AND PARTICLE CONTAMINATION CONTRIBUTION

DuPont ETFE TEFZEL 280

| 37 % HCl | Time (Days) | Cu | Si | Ca | K | Na | Li | Fe | Total Particles ($10^3$) per liter |
|---|---|---|---|---|---|---|---|---|---|
| | 0 | 0 | 0 | 0 | 0 | 0 | 0 | 0 | 0 |
| | 9 | 985 | 0 | 0 | 0 | 0 | 0 | <5 | 5 |
| | 27 | 1285 | 0 | 0 | 0 | 0 | 0 | <5 | 5 |
| | 81 | 1535 | 0 | 0 | 0 | 0 | 0 | <20 | 20 |
| | 180 | 1785 | 0 | 0 | 0 | 0 | 0 | <20 | 20 |

DuPont PFA 350

| 37% HCl | 0 | 0 | 0 | 0 | 0 | 0 | 0 | 0 | 0 |
|---|---|---|---|---|---|---|---|---|---|
| | 9 | 0 | 0 | <5 | 0 | 0 | 0 | <5 | 51 |
| | 27 | 0 | 0 | <5 | 0 | 0 | 0 | <5 | 96 |
| | 81 | 0 | 0 | <10 | 0 | 0 | 0 | <5 | -- |
| | 180 | 0 | 0 | <10 | 0 | 0 | 0 | <5 | -- |

Pennwalt Kynar 460 PVDF

| 37% HCl | 0 | 0 | 0 | 0 | 0 | 0 | 0 | -- | -- |
|---|---|---|---|---|---|---|---|---|---|
| | 9 | 0 | 5 | 5 | 0 | 0 | 0 | -- | -- |
| | 27 | 0 | 5 | 5 | 0 | 0 | 0 | -- | -- |

-- = no data taken

The bonding strengths of various materials joined together in separate layers were tested on an Instron Peel Test Machine. The sample materials tested were 1/2 inch in width and the Test Machine had a cross head speed of 2 inches per minute. The measured peel strength was expressed in pounds per inch as shown in the following Table IV. Where the peel strength is expressed as "no tab", the Instron Test Machine was unable to peel apart the layers. All PVDF tested was Solef 1010, produced by the Soltex Polymers Division of Solvay & Cie Co. Kraton is Shell's styrene-ethylene-butylene-styrene or styrene-butadiene-styrene (SEBS or SBS) block copolymer. Soltex's Fortiflex brand polyethylene grade XF 450 was used. DuPont's ELVAX polyethylene-vinyl acetate was used in the desired grade in the second or outer layer.

## TABLE IV

| First Layer | Second Layer | Peel Strength lbs. per inch |
|---|---|---|
| PVDF | 80% Shell Kraton G-1651 SEBS 20% polyethylene | 0.7346 |
| PVDF | 80% Elvax 670 ethylene vinyl acetate 20% Shell Chemical polypropylene 7129 | 0.1544 |
| PVDF | 40% Elvax 670 ethylene vinyl acetate 60% Shell Chemical polypropylene 7129 | 0.2940 |
| PVDF | 80% Shell Kraton G-1651 SEBS 20% Shell Chemical polypropylene 7129 | 0.1983 |
| Shell Chemical 7129 Poly-propylene | Elvax 360 | No Tab |
| Shell Chemical 7129 Poly-propylene | 40% Elvax 670 60% polypropylene | No Tab |
| Shell Chemical 7129 Poly-propylene | 40% Shell Kraton G-1651 SEBS 60% PVDF | 4.3478 |
| Shell Chemical 7129 Poly-propylene | 20% Shell Kraton G-1651 SEBS 80% Polyethylene | 0.5107 |
| Shell Chemical 7129 Poly-propylene | 60% Shell Kraton G-1651 SEBS 40% Polyethylene | No Tab |
| Soltex Polyethylene Fortiflex XF 450 | 40% Shell Kraton G-1651 SEBS 60% Shell Chemical Polypropylene 7129 | 3.162 |
| Soltex Polyethylene Fortiflex XF 450 | 20% Elvax 670 80% Shell Chemical Polypropylene 7129 | 0.516 |

**0 294 184**

In order to exemplify the results achieved, the following Examples are provided without any intent to limit the scope of the invention to the discussion presented therein. The Examples are intended to show the ability to blow mold hollow, multiple-layered containers using layers that are both pure and blends of different plastic materials to form chemically resistant and non-contaminating containers for high purity and highly reactive chemicals.

## EXAMPLE I

Air pressure of about 90 to about 130 pounds per square inch was used to blow mold the multiple layer container from a 2 layered parison of PVDF and high density polyethylene (HDPE) into the mold. The PVDF was Solef 1010 available from Soltex and the polyethylene was Fortiflex XF-450 also available from Soltex. Both materials had about a 3 to about a 4 minute residence time in a Bekum Model BM-401 five screw extruder with a screw length to diameter ratio of 20/1 and compression ratios for each extruder of 1.849, 1.849, 1.01, 1.01 and 1.04. Only extruders 1 and 2 were used, both with the 1.849 ratio. The heating temperatures for the 5 heating zones from the feed zone to the pumping zone, respectively, for the PVDF were 370°F, 440°F, 440°F, 440°F and 440°F. The heating temperatures for the 5 heating zones from the feed zone to the pumping zone, respectively for the HDPE were 330°F, 340°F, 355°F, 365°F and 365°F. The PVDF extruder's extrusion rate was about 279 grams per 30 seconds and the 50mm diameter screw turned at a rate of about 16 revolutions per minute. The extrusion rate for both the PVDF and the HDPE was about 74 pounds per hour. The HDPE extruder's screw was 50mm in diameter and turned at a rate of about 48 revolutions per minute. The co-extrusion head's 6 heating zones were all maintained at about 440°F.

The materials thus described were fed into the Bekum extruder to obtain a molten parison that was blow molded to obtain a hollow, two-layered container. The container was air cooled and then removed from the mold. There was little adhesion between the layers, except where the layers were joined at the threaded top, the base and along the pinch points due to the shape of the mold. About 50 containers were thus molded and averaged about 186 grams in weight. The PVDF inner layer had a thickness of from about 5 to about 12 mils, while the thickness of the HDPE outer layer varied from about 15 to about 40 mils.

## EXAMPLE II

The same equipment was used in the same manner as in Example I to blow mold a hollow, two layered container with an inner layer of Soltex Solef 1010 PVDF and an outer layer of a blend of about 50% Soltex's Fortiflex XF 450 HDPE and about 50% DuPont ELVAX 360 polyethylene-vinyl acetate. The outer layer was blended by putting a dry blend of pellets in a dry rotary mixer for about 5 to about 10 minutes of mixing prior to feeding into the extruder.

The extruder's 5 heating zones from the feed zone to the pumping zone, respectively, for the PVDF were 350°F, 420°F, 420°F, 420°F and 420°F. The corresponding temperatures for the HDPE/polyethylene-vinyl acetate blend were 300°F, 300°F, 310°F, 320°F and 320°F. The co-extrusion head's 6 heating zones were all maintained at about 420°F. The combined extrusion rate from the PVDF and HDPE/polyethylene-vinyl acetate blend extruders was about 65 pounds per hour.

The materials described were fed into the Bekum extruder to obtain a molten parison that was blow molded at the same air pressure range as described in Example I to obtain a hollow two layer container. The container was removed from the mold after it was air cooled. The layers exhibited strong adhesion about the entire container's periphery. Approximately 50 containers were made using the same materials and procedures; the weight of the containers ranged from about 140 grams to about 160 grams in weight. The PVDF inner layer had a thickness of from about 5 to about 12 mils, while the thickness of the blend outer layer varied from about 15 to about 40 mils.

## EXAMPLE III

The same equipment was used in the same manner as in Example I to blow mold a hollow, two layered container with an inner layer of Soltex Solef 1010 PVDF and an outer layer of a blend of about 67% Soltex Fortiflex XF 450 HDPE and about 33% DuPont ELVAX 360 polyethylene-vinyl acetate. The outer layer was blended by putting a dry blend of pellets in a dry rotary mixer for about 5 to about 10 minutes of mixing prior to feeding into the extruder.

The extruder's 5 heating zones from the feed zone to the pumping zone, respectively, for the PVDF were 350°F, 420°F, 420°F, 420°F and 420°F. The corresponding temperatures for the HDPE/polyethylene-vinyl acetate were 300°F, 300°F, 310°F, 320°F and 320°F. The co-extrusion head's 6 heating zones were all maintained at about 420°F. The combined extrusion rate from the PVDF and HDPE/polyethylene-vinyl acetate extruders was about 65 pounds per hour.

The materials described were fed into the Bekum extruder to obtain a molten parison that was blow molded at the same air pressure range as described in Example I to obtain a hollow two layered container. After the

12

**0 294 184**

container was air cooled, it was removed from the mold. The layers exhibited strong adhesion about the entire container's periphery. Approximately 50 containers were made using the same materials and procedures; the weight of the containers ranged from about 140 grams to about 160 grams in weight. The PVDF inner layer had a thickness of from about 5 to about 12 mils, while the thickness of the blend outer layer varied from about 15 to about 40 mils.

The invention extends to all obvious changes in the details, materials, and blends of materials which will occur to one of skill in the art upon a reading of the disclosure. For example, the handle 12 could equally well be hollow.

## Claims

1. A hollow multiple-layered blow molded structure providing an effective liquid and vapor barrier for the storage of high purity and highly reactive chemicals susceptible to contamination by specific ionic species selected from the group consisting of potassium, lithium and sodium having a top portion for filling and emptying and adapted to receive a closure means and a base portion upon which the container stands comprising in the absence of an intermediate tie layer in combination:

(a) a first chemical resistant and non-contaminating inner layer selected from the group consisting of polyvinylidene fluoride polymer, polyvinylidene fluoride copolymer containing from about 60 to about 99% molar vinylidene fluoride monomer, perfluoroalkoxy vinyl ether polymer, and perfluoroalkoxy vinyl ether copolymer containing from about 30 to about 99% molar perfluoroalkoxy vinyl ether monomer, the layer further being impermeable to the specific ionic species and not contributing greater than 50 parts per billion of each of the ions selected from the group consisting of copper, silicon, calcium, potassium, sodium, lithium and iron; and

(b) a second structurally reinforcing outer layer fastened to the first chemical resistant layer selected from the group consisting of polypropylene, polyethylene, polycarbonate, polyarylate and polysulfone.

2. The muitiple-layered structure according to claim 1 wherein the first chemically resistant layer is between about 3 mils and 15 mils thick.

3. The multiple-layered structure according to claim 1 wherein the second structurally reinforcing layer is between about 10 mils and about 70 mils thick.

4. The multiple-layered structure according to claim 2 wherein the first chemical layer is between about 3 mils and about 5 mils thick.

5. The multiple-layered structure according to claim 3 wherein the second structurally reinforcing layer is between about 30 mils and about 40 mils thick.

6. The multiple-layered structure according to claim 1 wherein the first chemical resistant layer is fastened to the second structurally reinforcing layer by crimping the layers together at least at the top portion and the base portion.

7. The multiple-layered structure according to claim 3 wherein the combined thickness of the first chemically resistant and non-contaminating layer and the second structurally reinforcing layer is at least about 30 mils.

8. The multiple-layered structure according to claim 1 wherein the yellowness index of the inner layer is about 8 or less.

8. The multiple-layered structure according to any preceding claim wherein the first chemical resistant and non-contaminating layer comprises about 50% molar copolymer and about 50% molar monomer.

10. A hollow multiple-layered blow molded container providing an effective liquid and vapor barrier for the storage of high purity and highly reactive chemicals susceptible to contamination by specific ionic species selected from the group consisting of potassium, lithium, and sodium having a top portion for filling and emptying and adapted to receive a closure means and a base portion upon which the container stands comprising in combination:

(a) a first chemical resistant and non-contaminating inner layer selected from the group consisting of polyvinylidene fluoride polymer, polyvinylidene fluoride copolymer containing from about 60 to about 99% molar vinylidene fluoride monomer, perfluoroalkoxy vinyl ether polymer, and perfluoroalkoxy vinyl ether copolymer containing from about 30 to about 99% molar perfluoroalkoxy vinyl ether monomer, the layer further being impermeable to the specific ionic species and not contributing greater than 50 parts per billion of each of the ions selected from the group consisting of copper, silicon, calcium, potassium, sodium, lithium, and iron; and

(b) a second structurally reinforcing layer bonded to the first chemical resistant layer comprising a blend of high density polyethylene and polyethylene-vinyl acetate.

11. The container according to claim10 wherein the second structurally reinforcing layer is bonded to a third layer of polyethylene.

12. The container according to claim 11 wherein the polyethylene is high density polyethylene.

13. The multiple-layered container according to claim10 wherein a blend of polyethylene and polyethylene-vinyl acetate is from about 50 to about 67% polyethylene and from about 50% to about 33% vinyl acetate.

14. The multiple-layered container according to claim 13 wherein the first chemical resistant and non-contaminating inner layer is between about 3 mils and about 15 mils thick.

15. The multiple-layered container according to claim 14 wherein the first chemical resistant and non-contaminating inner layer is between about 3 mils and 5 mils thick.

16. The multiple-layered container according to claim 14 wherein the second structurally reinforcing layer is between about 10 mils and about 70 mils thick.

17. The multiple-layered container according to claim 16 wherein the second structurally reinforcing layer is between about 30 mils and about 40 mils thick.

18. The multiple-layered container according to claim 14 wherein the second structurally reinforcing layer is bonded to a third layer of polyethylene, the third layer further having a thickness of between about 10 and about 70 mils.

19. The multiple-layered container according to claim 18 wherein the second structurally reinforcing layer is between about 1 mil and about 15 mils thick.

20. The multiple-layered container according to claim 19 wherein the second structurally reinforcing layer is between about 2 mils and about 5 mils thick.

21. The multiple-layered container according to claim 20 wherein the combined thickness of the first chemical resistant and non-contaminating inner layer, the second structurally reinforcing layer and the third layer is at least about 30 mils.

22. The multiple-layered container according to claim 10 wherein the yellowness index of the inner layer is about 8 or less.

23. A hollow multiple-layered blow molded container providing an effective liquid and vapor barrier for the storage of high purity and highly reactive chemicals susceptible to contamination by specific ionic species selected from the group consisting of potassium, lithium, and sodium having a top portion for filling and emptying and adapted to receive a closure means and a base portion upon which the container stands comprising in combination:

(a) a first chemical resistant and non-contaminating inner layer selected from the group consisting of perfluoroalkoxy vinyl ether polymer and perfluoroalkoxy vinyl ether copolymer, the layer further being impermeable to the specific ionic species and not contributing greater than 50 parts per billion of each of the ions selected from the group consisting of copper, silicon, calcium, potassium, sodium, lithium, and iron; and

(b) a second structurally reinforcing layer bonded to the first chemical resistant layer comprising a binary blend consisting of a fluoropolymer selected from the group consisting of polyvinylidene fluoride or perfluoroalkoxy vinyl ether copolymer and a polymer selected from the group consisting of fluoropolymers and a compound selected from the group consisting of polyethylene-vinyl acetate, styrene-ethylene-butylene-styrene block copolymers, and combinations thereof.

0294184

FIG-1

FIG-2

FIG-3